# EUROPEAN PATENT APPLICATION

(11) **EP 4 542 727 A1**
(43) Date of publication of application: **23.04.2025**
(21) Application number: 24729934.0
(22) Date of filing: 15.01.2024
(51) Int. Cl.: H01M 10/48, H01M 50/147, H01M 50/186, H01M 50/593

(54) **BATTERY TOP COVER ASSEMBLY AND BATTERY**

(30) Priority: 20.04.2023 CN 202320899689 U
(71) Applicant: Eve Power Co., Ltd., Jingmen, Hubei 448000 (CN)
(72) Inventor: ZHOU, Yu, Jingmen, Hubei 448000 (CN); CHEN, Xianyang, Jingmen, Hubei 448000 (CN); SUN, Fei, Jingmen, Hubei 448000 (CN)
(74) Representative: Regimbeau
(86) International application number: PCT/CN2024/072292
(87) International publication number: WO 2024/114829

(57) **Abstract**

A battery top cover assembly includes a top cover sheet, a lower insulating member and a pole. The top cover sheet is provided with a mounting hole which penetrates the top and bottom of the top cover sheet, the lower insulating member is provided with a first through hole which penetrates the top and bottom of the lower insulating member and corresponds to the mounting hole, one end of the pole passes through the mounting hole and the first through hole and is pressed against a side of the lower insulating member facing away from the top cover sheet, a cavity is formed between the top cover sheet and the pole, and a vent portion is provided at the portion where the lower insulating member is pressed against the pole.

## Description

This application claims the priority of a Chinese Patent Application filed with the National Intellectual Property Administration (CNIPA) on April 20, 2023, with application No. 202320899689.0, and all disclosure of which is incorporated herein by reference in its entirety.

### TECHNICAL FIELD

The present application relates to the technical field of battery, for example, to a battery top cover assembly and a battery including the battery top cover assembly.

### BACKGROUND

With the emergence of carbon neutrality demand, the battery industry is booming. The top cover assembly is one of the important components of the battery, mainly used to seal the opening end of the battery shell.

The top cover assembly includes a cover plate and an insulating bracket, and the cover plate is provided with mounting holes on its opposite sides along the thickness direction of the cover plate. The pole includes a pole body and a pressing plate provided at one end of the pole body, and the pressing plate protrudes from the outer periphery of the pole body. The insulating bracket is arranged on a side of the cover plate facing to the inside of the battery shell, and the insulating bracket is provided with through holes corresponding to the mounting holes. The pole body passes through the mounting holes and the through holes in sequence to be connected to the pressing plate, and the pressing plate is pressed on the side of the insulating bracket facing to the inside of the battery shell. In order to prevent leakage caused by the inside of the battery shell being connected to the outside, a sealing ring is provided between the cover plate and the pole body.

In the top cover assembly of this structure, the pressing plate and the insulating bracket are tightly combined under pressure to form a sealing portion, and the gas cannot flow through the sealing portion between the pressing plate and the insulating bracket. When a sealing ring is omitted from being mounted to the top cover assembly, the top cover assembly can still pass the helium detection, resulting in misjudgment of the helium detection.

### SUMMARY

A battery top cover assembly is provided according to the present application, which can improve the accuracy of helium detection.

A battery is provided according to the present application, which has a high yield rate.

In a first aspect, a battery top cover assembly is provided according to embodiments of the present application, which includes a top cover sheet, a lower insulating member and a pole. The lower insulating member is stacked on a side of the top cover sheet facing to an inside of a battery shell. The top cover sheet is provided with a mounting hole, and the mounting hole penetrates a top of the top cover sheet and a bottom of the top cover sheet. The lower insulating member is provided with a first through hole, and the first through hole penetrates a top of the lower insulating member and a bottom of the lower insulating member and corresponds to the mounting hole. One end of the pole passes through the mounting hole and the first through hole in sequence, and is pressed against a side of the lower insulating member facing away from the top cover sheet. A cavity for installing a sealing ring is formed between the top cover sheet and the pole. At least one vent portion in communication with the cavity is provided at a portion where the lower insulating member is pressed against the pole, the vent portion is a vent hole or a vent groove, and is in communication with a side of the lower insulating member facing away from the top cover sheet.

In one embodiment, at least two vent portions are provided, and all the vent portions are spaced around a center line of the first through hole.

In one embodiment, the lower insulating member includes a boss, the first through hole is provided in the boss. A lower end of the pole is pressed against the boss. The vent portion is the vent hole, the vent hole is provided in the boss. The vent hole penetrates a top of the boss and a bottom of the boss, and the vent hole is in communication with the first through hole.

In one embodiment, the lower insulating member includes a boss, the first through hole is provided in the boss. A lower end of the pole is pressed against the boss. The vent portion is the vent groove. A groove on a side of the boss facing to the inside of the battery shell is provided with the vent groove, and the vent groove is in communication with the first through hole.

In one embodiment, the depth of the vent groove is H, the thickness of the boss is D, and 0.1mm≤H<D.

In one embodiment, the vent groove is a trapezoidal groove. The trapezoidal groove includes a small end and a large end, the small end is a groove bottom of the vent groove, the large end is a groove top of the vent groove, and the groove top of the vent groove is facing to the inside of the battery shell.

In one embodiment, the pole includes a pole body and a pressing plate connected to the pole body. The pressing plate is pressed against the side of the boss facing away from the top cover sheet. One end of the pole body passes through the mounting hole and the first through hole, and is connected to the pressing plate, and the cavity is located between the pole body and the boss.

In one embodiment, a groove is provided on the side of the boss facing to the inside of the battery shell, the groove surrounds the first through hole, and a side of the pressing plate facing the boss is located in the groove.

In one embodiment, a gap is present between the pressing plate and a side wall of the groove, and the vent portion is in communication with the inside of the battery shell through the gap.

In the second aspect, a battery is further provided according to embodiments of the present application, which includes a battery shell with at least one end being provided with an opening, and the battery further includes the battery top cover assembly as described above. The battery top cover assembly is arranged at the opening end of the battery shell in a sealed manner.

The beneficial effect of the present application is as follows. The lower insulating member is provided with the vent hole or the vent groove as a vent portion. When the battery top cover assembly is subjected to helium detection, since the vent portion is in connection with each of the side of the lower insulating member facing to the inside of the battery shell and the cavity for installing the sealing ring, the vent portion allows the portion where the lower insulating member is pressed against the pole to have a space for gas flow, thereby preventing a sealed surface between the lower insulating member and the pole from being formed which may adversely affect the helium detection of the battery top cover assembly. By providing the lower insulating member with the vent hole or the vent groove as a vent portion, when the sealing ring is missing or the sealing ring fails, the gas can enter the cavity through the vent portion during helium detection, thereby improving the accuracy of helium detection and facilitating improvement of the yield of the battery. In order to maintain the sealing performance of the sealing ring, it is required that the part where the pole directly contacts the sealing ring is free of burrs. In this solution, the vent hole or the vent groove is set in the lower insulating member. Thus, in the processing of the vent portion, the part directly contacting the sealing ring will not be damaged and burred, which facilitates improvement of the sealing performance of the sealing ring, prevents the battery top cover assembly from leaking, and facilitates reduction of the processing difficulty of the vent portion.

### BRIEF DESCRIPTION OF THE DRAWINGS

The present application is further described in detail based on the accompanying drawings and embodiments.
FIG. 1 is a cross-sectional view of a battery top cover assembly according to an embodiment of the present application.
FIG. 2 is an enlarged view of part A in FIG. 1.
FIG. 3 is a structural diagram of a lower insulating member according to an embodiment of the present application.
FIG. 4 is an enlarged view of part B in FIG. 3.
FIG. 5 is another structural diagram of a lower insulating member according to an embodiment of the present application.
FIG. 6 is a cross-sectional view of C-C in FIG. 5.
FIG. 7 is an enlarged view of part D in FIG. 6.
FIG. 8 is another structural diagram of a lower insulating member according to an embodiment of the present application.
FIG. 9 is an enlarged view of point E in FIG. 8.

### Reference numeral list:

1. top cover sheet; 11. mounting hole; 2. lower insulating member; 21. vent hole; 22. vent groove; 23. boss; 24. first through hole; 25. groove; 26. gap; 3. pole; 31. pole body; 32. pressing plate; 4. cavity; 5. sealing ring; 6. upper insulating member; 7. riveting block.

### DETAILED DESCRIPTION

In the description of this application, it is to be noted that, unless otherwise expressly specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internally connection of two components or interaction relationship between two components. For those of ordinary skill in the art, specific meanings of the preceding terms in the present application may be construed based on specific situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

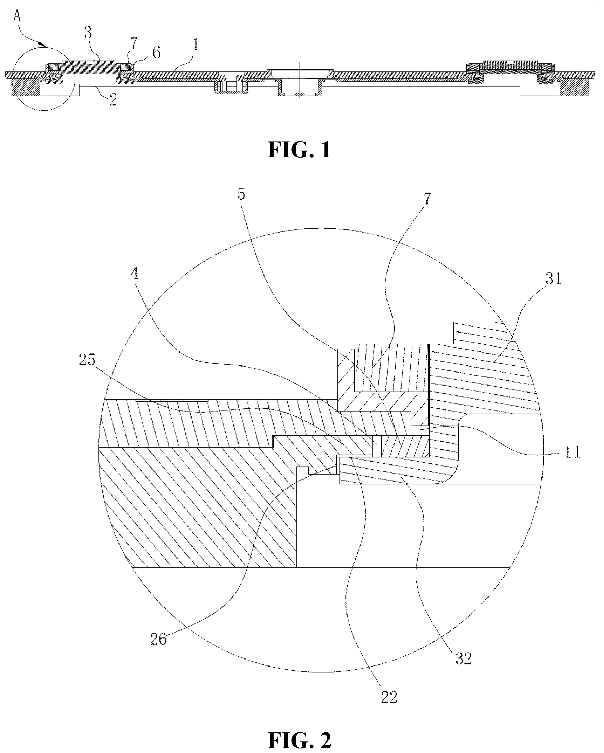

A battery top cover assembly is provided according to the present application, which is mainly used in a battery. In this specification, the specific structure of the battery top cover assembly is described in detail in conjunction with the battery. The battery includes a battery shell and a battery top cover assembly, at least one end of the battery shell is provided with an opening, a battery cell is arranged inside the battery shell, and the battery top cover assembly is arranged at the opening end of the battery shell to seal the opening end of the battery shell. Referring to FIG. 1 to FIG. 4, FIG. 8 and FIG. 9, the battery top cover assembly includes a top cover sheet 1, a lower insulating member 2 and a pole 3. The lower insulating member 2 is stacked on a side of the top cover sheet 1 facing to the inside of the battery shell. The top cover sheet 1 is provided with a mounting hole 11 which penetrates the top of the top cover sheet 1 and the bottom of the top cover sheet 1, the lower insulating member 2 is provided with a first through hole 24 which penetrates the top of the lower insulating member 2 and the bottom of the lower insulating member 2 and corresponds to the mounting hole 11. One end of the pole 3 passes through the mounting hole 11 and the first through hole 24 in sequence and is pressed against a side of the lower insulating member 2 facing away from the top cover sheet 1. A cavity 4 for installing a sealing ring 5 is formed between the top cover sheet 1 and the pole 3, and the cavity 4 is in communication with the outside. At least one vent portion in communication with the cavity 4 is provided at the position where the lower insulating member 2 is pressed against the pole 3, the vent portion is a vent hole 21 or a vent groove 22, and the vent portion is in communication with the side of the lower insulating member 2 facing away from the top cover sheet 1 (i.e., the side of the insulating member 2 facing to the inside of the battery shell). It should be noted that the "external environment" in this specification refers to the outside of the battery top cover assembly and the outside of the battery shell.

In order to seal the gap between a side wall of the first through hole 24 and the pole 3, a sealing ring 5 is provided in the gap between the side wall of the first through hole 24 and the pole 3 in the battery top cover assembly to prevent the electrolyte inside the battery shell from leaking to the outside of the battery.

The lower insulating member 2 is provided with the vent hole 21 or the vent groove 22 as the vent portion. When the battery top cover assembly is subjected to helium detection, since the vent portion is in connection with each of the side of the lower insulating member 2 facing to the inside of the battery shell and the cavity 4 for installing the sealing ring 5, the vent portion allows the portion where the lower insulating member 2 is pressed against the pole 3 to have a space for gas flow, thereby preventing a sealed surface between the lower insulating member 2 and the pole 3 from being formed which may adversely affect the helium detection of the battery top cover assembly. By providing the lower insulating member 2 with the vent hole 21 or the vent groove 22 as a vent portion, when the sealing ring 5 is missing or the sealing ring 5 fails, the gas can enter the cavity 4 through the vent portion during helium detection, thereby improving the accuracy of helium detection and facilitating improvement of the yield of the battery. In order to maintain the sealing performance of the sealing ring 5, it is required that the part where the pole 3 directly contacts the sealing ring 5 is free of burrs. In this solution, the vent hole 21 or the vent groove 22 is set in the lower insulating member 2. Thus, in the processing of the vent portion, the part directly contacting the sealing ring 5 will not be damaged and burred, which facilitates improvement of the sealing performance of the sealing ring, prevents the battery top cover assembly from leaking, and facilitates reduction of the processing difficulty of the vent portion.

In an embodiment, at least two vent portions are provided, and all the vent portions are spaced around the center line of the first through hole 24. At least two vent portions are set, and when one of the vent portions fails during helium detection, ventilation can still be achieved through the remaining vent portions.

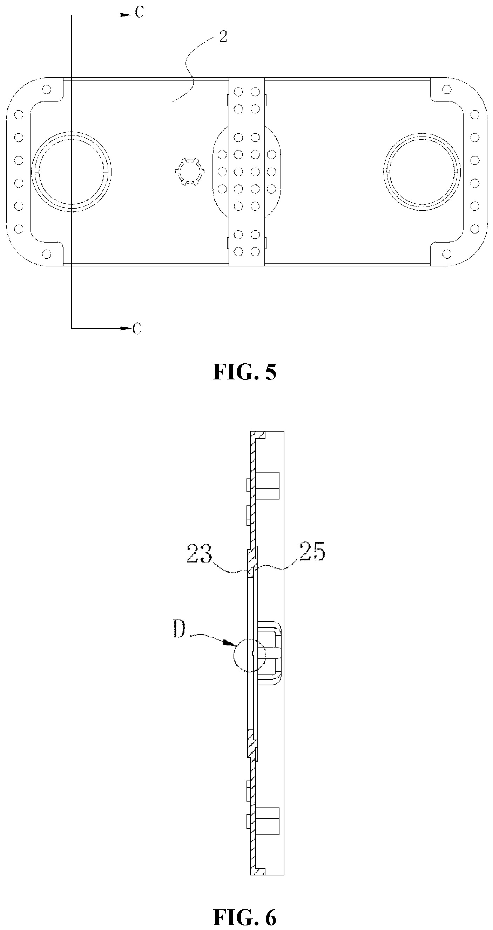

In one example, referring to FIG. 5, two vent portions are provided.

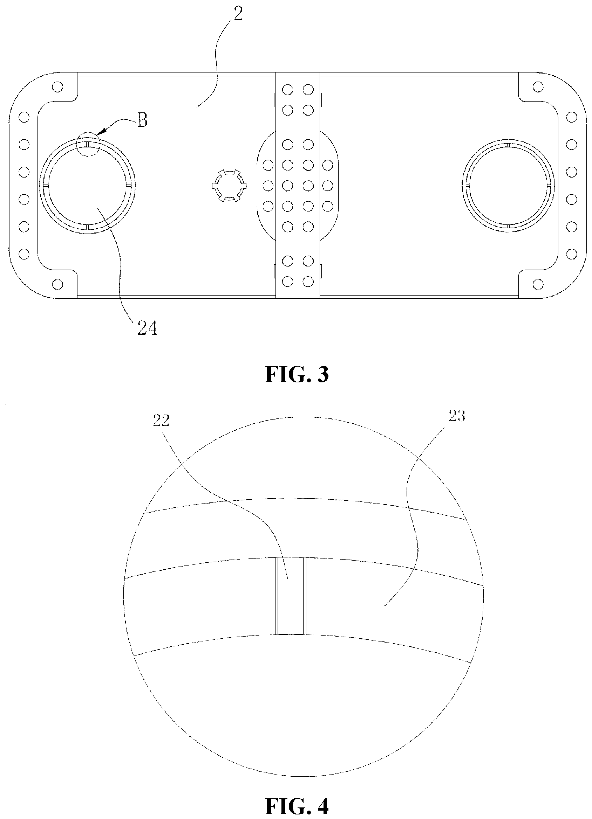

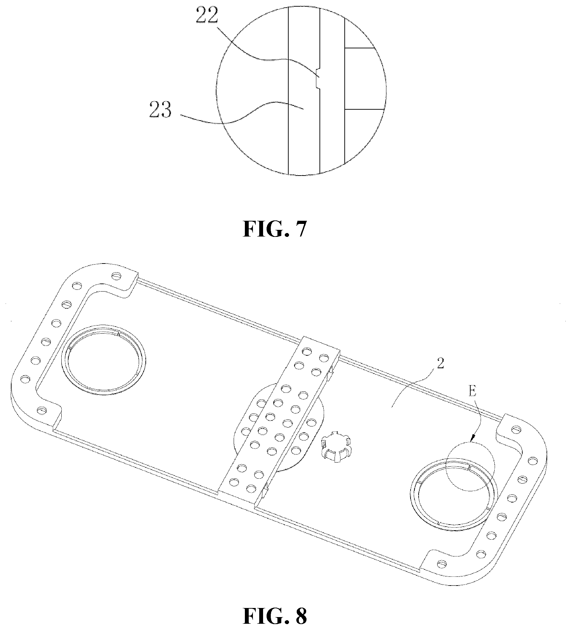

In another example, referring to FIG. 3 and FIG. 8, four vent portions are provided.

In other examples, the number of vent portions may also be set to one, three, five or six, etc., and the number of vent portions is not specifically limited here.

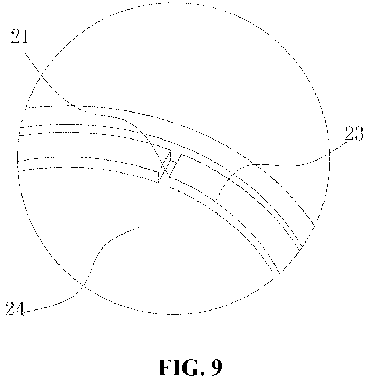

In a battery top cover assembly according to an embodiment, referring to FIG. 8 and FIG. 9, the lower insulating member 2 includes a boss 23, the first through hole 24 is provided in the boss 23. A lower end of the pole 3 is pressed against the boss 23. The boss 23 is provided with the vent hole 21 which penetrates the top of the boss 23 and the bottom of the boss 23. The vent portion is the vent hole 21, and the vent hole 21 is in communication with the first through hole 24. The vent hole 21 is provided in the boss 23 as the vent portion, so the processing difficulty of the vent portion is relatively small.

In the battery top cover assembly according to another embodiment, referring to FIG. 1 to FIG. 7, the lower insulating member 2 includes a boss 23, the first through hole 24 is provided in the boss 23, the lower end of the pole 3 is pressed against the boss 23, the vent portion is the vent groove 22, and a groove 25 on one side of the boss 23 facing to the inside of the battery shell is provided with the vent groove 22, and the vent groove 22 is in communication with the first through hole 24. By providing the vent groove 22 on the boss 23, since the vent groove 22 does not penetrate a side of the boss 23 facing away from the inside of the battery shell, the damage to the boss 23 is small, which facilitates maintaining the structural strength of the lower insulating member 2.

In one embodiment, the depth of the vent groove 22 is H, the thickness of the boss 23 is D, 0.1mm≤H<D, the depth of the vent groove 22 is set to be greater than 0.1mm, and thus in the helium detection, it is ensured that the vent groove 22 has enough space for the gas to pass.

In an embodiment, the vent groove 22 is a trapezoidal groove, and the trapezoidal groove includes a small end and a large end. The small end of the trapezoidal groove is a groove bottom of the vent groove 22, and the large end of the trapezoidal groove is a groove top of the vent groove 22. The groove top of the vent groove 22 is facing to the inside of the battery shell. The vent groove 22 is set to be the structure with a large end and a small end, and since the large end of the vent groove 22 is the groove top of the vent groove 22, it is convenient to demold in processing the vent groove 22.

Referring to FIG. 1 and FIG. 2, the pole 3 includes a pole body 31 and a pressing plate 32 connected to the pole body 31. The pressing plate 32 is pressed tightly against the side of the boss 23 facing away from the top cover sheet 1. One end of the pole body 31 passes through the mounting hole 11 and the first through hole 24 and is connected to the pressing plate 32. In this embodiment, the pole body 31 is integrally arranged with the pressing plate 32, and the cavity 4 is located between the pole body 31 and the boss 23. The side of the pressing plate 32 facing to the top cover sheet 1 abuts against the side of the boss 23 facing away from the top cover sheet 1. By setting the pressing plate 32 connected to the pole body 31, it is convenient to assemble the battery top cover assembly. When to specifically assemble the battery top cover, the sealing ring 5 is first assembled on the pole 3, and then the lower insulating member and the top cover sheet 1 are assembled, and then the pole body 31 with the sealing ring 5 assembled is passed through the mounting hole 11 and the first through hole 24 sequentially to connect with the pressing plate 32.

In an embodiment, referring to FIG. 6, the boss 23 is provided with a groove 25 on its side facing to the inside of the battery shell, and the groove 25 surrounds the first through hole 24. A side of the pressing plate 32 facing the boss 23 is located in the groove 25. The lower insulating member 2 of this structure can accommodate part of the pressing plate 32 through the groove 25, so that the connection between the pressing plate 32 and the lower insulating member 2 is more compact.

It can be understood that when the periphery of the pressing plate 32 is tightly pressed against a side wall of the groove 25, the venting portion is not in communication with the side of the lower insulating member 2 facing to the inside of the battery shell. In the case where the lower insulating member 2 is provided with a groove, a gap 26 is present between the pressing plate 32 and the side wall of the groove 25, and the vent portion is in communication with the inside of the battery shell through the gap 26. Thus, during helium detection, the gas can enter the vent portion from the side of the lower insulating member 2 facing to the inside of the battery shell.

Referring to FIG. 1, the battery top cover assembly further includes an upper insulating member 6 arranged on the side of the top cover sheet 1 facing away from the lower insulating member 2, the upper insulating member 6 is provided with a mounting groove, and the bottom of the mounting groove is provided with a second through hole (not marked in the drawing) facing the mounting hole 11. One end of the pole body 31 passes through the second through hole, the mounting hole 11 and the first through hole 24 in sequence to connect with the pressing plate 32, and the other end of the pole 3 is riveted in the mounting groove by a riveting block 7.

In another embodiment, a battery is further provided, and the battery includes a battery shell and a battery top cover assembly of any of the above structures. At least one end of the battery shell is provided with an opening, and the battery top cover assembly is arranged at the opening end of the battery shell in a sealed manner. In the battery of this structure, since the vent portion is in communication with each of the side of the lower insulating member 2 facing to the inside of the battery shell and the cavity 4 for installing the sealing ring 5, the vent portion provides a space for gas flow through the portion where the lower insulating member is pressed against the pole, preventing a sealing surface between the lower insulating member 2 and the pole 3 from being formed which may adversely affect the helium detection of the battery top cover assembly, thereby improving the yield of the battery.

In the description of this article, it should be understood that the orientation or position relationships indicated by the terms such as "upper", "lower", "left", "right", etc., are based on the orientation or position relationship shown in the drawings, which is only for the convenience of description and simplification of operation, and does not indicate or imply that the device or element referred to must have a specific orientation, be constructed and operated in a specific orientation, and therefore cannot be understood as a limitation of the present application. Furthermore, the terms "first" and "second" are only used to distinguish in the description and have no special meaning.

In the description of this specification, the description of the reference terms "one embodiment", "example", etc. means that the specific features, structures, materials or characteristics described in conjunction with the embodiment or example are included in at least one embodiment or example of the present application. In this specification, the schematic representation of the above terms does not necessarily refer to the same embodiment or example.

Furthermore, it should be understood that although this specification is described according to the embodiments, not every embodiment contains only one independent technical solution. This description of the specification is only for the sake of clarity. The person skilled in the art should regard the specification as a whole. The technical solutions in multiple embodiments can also be appropriately combined to form other embodiments that can be understood by the person skilled in the art.

## Claims

1. A battery top cover assembly, comprising:
a top cover sheet, a lower insulating member and a pole,
wherein the lower insulating member is stacked on a side of the top cover sheet facing to an inside of a battery shell;
the top cover sheet is provided with a mounting hole, and the mounting hole penetrates a top of the top cover sheet and a bottom of the top cover sheet;
the lower insulating member is provided with a first through hole, and the first through hole penetrates a top of the lower insulating member and a bottom of the lower insulating member and corresponds to the mounting hole;
one end of the pole passes through the mounting hole and the first through hole in sequence, and is pressed against a side of the lower insulating member facing away from the top cover sheet;
a cavity for installing a sealing ring is formed between the top cover sheet and the pole; and
at least one vent portion in communication with the cavity is provided at a portion where the lower insulating member is pressed against the pole, the vent portion is a vent hole or a vent groove, and is in communication with a side of the lower insulating member facing away from the top cover sheet.

2. The battery top cover assembly according to claim 1, wherein at least two vent portions are provided, and all the vent portions are spaced around a center line of the first through hole.

3. The battery top cover assembly according to claim 1, wherein the lower insulating member comprises a boss, the first through hole is provided in the boss, a lower end of the pole is pressed against the boss, the vent portion is the vent hole, the vent hole is provided in the boss, the vent hole penetrates a top of the boss and a bottom of the boss, and the vent hole is in communication with the first through hole.

4. The battery top cover assembly according to claim 2, wherein the lower insulating member comprises a boss, the first through hole is provided in the boss, a lower end of the pole is pressed against the boss, the vent portion is the vent groove, a groove on a side of the boss facing to the inside of the battery shell is provided with the vent groove, and the vent groove is in communication with the first through hole.

5. The battery top cover assembly according to claim 4, wherein a depth of the vent groove is H, a thickness of the boss is D, and 0.1mm≤H<D.

6. The battery top cover assembly according to claim 4, wherein the vent groove is a trapezoidal groove, the trapezoidal groove comprises a small end and a large end, the small end is a groove bottom of the vent groove, the large end is a groove top of the vent groove, and the groove top of the vent groove is facing to the inside of the battery shell.

7. The battery top cover assembly according to claim 3 or 4, wherein the pole comprises a pole body and a pressing plate connected to the pole body, the pressing plate is pressed against the side of the boss facing away from the top cover sheet, one end of the pole body passes through the mounting hole and the first through hole, and is connected to the pressing plate, and the cavity is located between the pole body and the boss.

8. The battery top cover assembly according to claim 7, wherein a groove is provided on the side of the boss facing to the inside of the battery shell, the groove surrounds the first through hole, and a side of the pressing plate facing the boss is located in the groove.

9. The battery top cover assembly according to claim 8, wherein a gap is present between the pressing plate and a side wall of the groove, and the vent portion is in communication with the inside of the battery shell through the gap.

10. A battery, comprising:
a battery shell with at least one end being provided with an opening,
wherein the battery further comprises the battery top cover assembly as claimed in any one of claims 1 to 9, and the battery top cover assembly is arranged at the opening end of the battery shell in a sealed manner.
